# EUROPEAN PATENT SPECIFICATION

(11) **EP 1 592 722 B1**
(45) Date of publication and mention of the grant of the patent: **15.09.2010**
(21) Application number: 04702504.4
(22) Date of filing: 15.01.2004
(51) Int. Cl.: C08F 279/02, C08F 287/00

(54) **PARTICLE SIZE AND MORPHOLOGY CONTROL IN RUBBER MODIFIED MONOVINYLIDENE AROMATIC POLYMERS**
STEUERUNG VON TEILCHENGRÖSSE UND MORPHOLOGIE IN KAUTSCHUKMODIFIZIERTEN MONOVINYLIDENAROMAT-POLYMEREN
CONTROLE DE GRANULOMETRIE ET DE MORPHOLOGIE DANS DES POLYMERES POLY (MONOVINYLIDENE AROMATIQUE) MODIFIES AU CAOUTCHOUC

(30) Priority: 05.02.2003 US 445729 P
(43) Date of publication of application: 09.11.2005
(73) Proprietor: DOW GLOBAL TECHNOLOGIES INC., Midland MI 48674 (US)
(72) Inventor: BOUQUET, Gilbert, B-9000 Gent (BE); VANSPEYBROECK, Rony, S., Midland, MI 48642 (BE)
(74) Representative: Raynor, John
(86) International application number: PCT/US2004/000962
(87) International publication number: WO 2004/072136

(56) References cited:
- WO-A-00/55211
- WO-A-99/62975
- US-A- 5 721 320
- US-B1- 6 255 402

## Description

### BACKGROUND OF THE INVENTION

The present invention relates to rubber modified polymers obtained from vinyl aromatic monomers.

Rubber modified polymers, such as high impact polystyrene (HIPS) and acrylonitrile-butadiene-styrene (ABS), are typically produced by mass polymerizing styrene or styrene/acrylonitrile in the presence of dissolved rubber. ABS is more typically produced using an emulsion polymerization process which typically produces small rubber particles with the added benefit of high gloss products, but with increased conversion costs.

In the preparation of rubber modified polymers, the rubber particle size and morphology play an important role in controlling the physical properties of the final product. The final rubber particle size can be determined by a number of different parameters including shear, viscosity, and interfacial tension. Increased shear after phase inversion can be used to reduce particle size, however this adds expense and complexity to the process. The final rubber particle size can also be influenced by the viscosity ratio of the disperse phase/continuous phase, and the viscosity of the continuous phase polymer. Sizing readily occurs when the viscosity ratio is between 0.2 and 1; and with higher viscosity of the continuous phase, the greater the ease of particle breakup. The rubber phase viscosity is determined by the rubber level and by the solution viscosity of the rubber. Additionally, grafting and crosslinking of the rubber will increase rubber viscosity. Interfacial surface tension will also influence rubber particle size and morphology, wherein a reduction of the interfacial tension can be achieved by utilizing the compatible block rubbers or by grafting to make compatible rubbers in-situ. Compatible block rubbers are characterized by having a block miscible with the continuous phase and a block miscible with the discontinuous phase. A reduction of the interfacial tension will facilitate the sizing process thereby increasing the flexibility. In HIPS compositions, compatible rubbers include styrene-butadiene block rubbers. In ABS compositions, styrene-butadiene block rubbers are not compatible since polystyrene is not miscible with the SAN continuous phase. SAN-butadiene block rubbers are compatible with ABS, but are not commercially available. Therefore in ABS polymer compositions, compatible block copolymers have to be produced in situ via grafting. The use of functionalized rubbers has been investigated in order to make such compatible block rubbers in-situ in both HIPS and ABS processes due to the economic advantage.

U.S. Patent 5,721,320 by Priddy et al. discloses a free radical polymerization in the presence of a functionalized diene rubber having a stable free radical group such that a styrene-diene block or SAN-diene rubber is formed. However, Priddy refers to the production of transparent HIPS and ABS, wherein the rubber particle size is very small (0.1 micron), which is insufficient for many high impact applications.

U.S. Patent 6,262,179 by Atochem discloses a process for producing vinyl aromatic polymers in the presence of a stable free radical. However, the resultant product has a very wide rubber particle size distribution, which can negatively affect physical properties.

U.S. Patent 6,255,402 by Atochem discloses a process of polymerizing at least one vinyl aromatic monomer in the presence of a rubber comprising a group which generates a stable free radical. However, this process utilizes a wide variety of rubbers, including those having high solution viscosity, which can negatively affect physical properties, for example. gloss, of the polymer.

U.S. Patent 6,255,448 by Atochem discloses a process for the polymerization of at least one monomer in the presence of a stable free radical having substitution in the beta position. However, these beta substituted stable free radicals can have increased cost and may not be used in anionic coupling due to the reactivity of the substituent.

WO 99/62975 by Atochem discloses a process using a stable free radical and an initiator. This process also utilizes high viscosity rubbers which can negatively affect gloss and other physical properties.

WO 01/74908 by BASF discloses a method of polymerization in the presence of a stable free radical and a thiol compound. U.S. Patent 4,581,429 discloses the use of alkoxy amines (>N-O-X) in controlled radical polymerization, wherein the alkoxy amine forms a free radical (X⁻) which is suitable as a free radical initiator and a stable free mdical(>N-O⁻). However, this method does not include the production of rubber modified polymers.

WO 00/55 211 by Atochem discloses a method for making a rubber bearing a group of stable free radicals.

Therefore, there remains a need for achieving the rubber particle size, distribution and morphology desired, utilizing in-situ produced block rubbers which offer enhanced physical properties and efficient processing using a cost effective mass/solution process.

### SUMMARY OF THE INVENTION

The present invention offers a solution for achieving rubber particle size, distribution and morphology control in the production of rubber modified polymers at an increased rate utilizing functionalized diene rubbers, wherein the functionality enables controlled radical polymerization.

The present invention is a mass/solution polymerization process utilizing a functionalized diene rubber to produce, a rubber modified polymer from a vinyl aromatic monomer comprising polymerizing the vinyl aromatic monomer using a linear polymerization process in the presence of a rubber, wherein the rubber comprises a functionalized styrene-butadiene block copolymer rubber having:
a) a solution viscosity (5 percent in styrene at 20 degrees C) of from 5 to less than 50 centipoise (cps), and
b) at least one functional group per rubber molecule which enables controlled radical polymerization; such that grafted compatible rubbers are formed and dispersed within a matrix comprising polymerised vinyl aromatic monomer and have a broad monomodal size distribution and wherein the rubber is present in an amount of from 5 to 25 percent based on the total weight of the polymerisation mixture, allowing improved control of rubber particle size, distribution and morphology. Higher production rates are made possible due to the presence of these grafted compatible rubbers.

It has been surprisingly discovered that the process of the present invention produces a rubber modified polymer of superior gloss and toughness due to the increased control of the rubber particle size, distribution and morphology utilizing the specific functionalized diene rubbers as described.

### DESCRIPTION OF THE PREFERRED EMBODIMENTS

Vinyl aromatic monomers suitable for use in the process of the present invention include any vinyl aromatic monomers such as those described in U.S. Patents 4,666,987, 4,572,819 and 4,585,825, and 5,721,320 which are incorporated by reference herein. The vinyl aromatic monomer may also be combined with other copolymerizable monomers. Examples of such monomers include, but are not limited to acrylic monomers such as acrylonitrile, methacrylonitrile, methacrylic acid, methyl methacrylate, acrylic acid, and methyl acrylate; maleimide, N-phenyl maleimide, and maleic anhydride. The polymerization of the vinyl aromatic monomer is conducted in the presence of predissolved elastomer/rubber to prepare impact modified, grafted rubber containing products, examples of which are described in U.S. Patents 3,123,655, 3,346,520, 3,639,522, and 4,409,369, which are incorporated by reference herein.

The rubber used in the process of the present invention comprises a functionalized low viscosity diene rubber having a solution viscosity (5 percent in styrene at 20°C) in the range of 5 to less than 50 centipoise (cps), preferably from 10, more preferably from 15, and most preferably from 20 to less than 45, preferably to less than 40, more preferably to less than 35, and most preferably to less than 30 cps. In general, the solution viscosity for the functionalized diene rubber will be below 50 cps. The functionalized diene rubber additionally exhibits a second order transition temperature not higher than 0°C, and preferably not higher than about -20°C.

Suitable functionalized diene rubbers are styrene butadiene block copolymer. Specifically, the functionalized copolymers can be diblock copolymers of butadiene, and styrene, wherein the block produced from the vinyl aromatic monomer is at least 5 weight percent, preferably at least 10 weight percent based on the total weight of the block copolymer. The functionalized block copolymers can have any number of blocks having an (AB)ₙ configuration, wherein n is an integer from 1 to 4, such as AB, ABAB, ABABAB and so on. Preferably, the functionalized copolymer rubber is a functionalized AB block rubber. Preferably, the functionalized copolymer rubber contains at least 5, more preferably at least 10, and most preferably at least 15 to 40, preferably to 35, more preferably to 30 and most preferably to 25 weight percent vinyl aromatic block, based on the total weight of the functionalized block copolymer. It is known that a small amount of tapering can occur in the production of such block rubbers. The rubber may have any architecture, such as linear, branched or star branched, and a microstructure having any vinyl/cis/trans ratio, as long as the rubber meets the other requirements stated previously.

Such rubbers are widely known in the art as well as methods for their manufacture as disclosed in Science and Technology of Rubber (Academic Press, ) Ed. James E.Mark, Burak Erman, Frederick R.Eirich-Chapter 2. VIII pgs. 60-70.

The functionalized diene rubber contains a minimum of 1 functional group per rubber molecule. The functional group is defined as a functionality which enables controlled radical polymerization. Controlled radical polymerization employs the principle of dynamic equilibration between growing free radicals and dormant or unreactive species as disclosed in "Controlled/Living Radical Polymerization" (2000) p. 2-7 ACS Symposium series, 768.

The functionality included in the functionalized diene rubber can enable controlled radical polymerization through a number of different mechanisms including:
I) stable free radical polymerization, for example, nitroxide mediated polymerization;
II) metal catalyzed atom transfer radical polymerization (ATRP),
III) reversible addition-fragmentation chain transfer (RAFT) and
IV) a degenerative transfer process based on a thermodynamically neutral (at the propagation stage) exchange process between a growing radical, and a dormant species; and
other degenerative transfer processes as described in Handbook of Radical Polymerization, Ed. K.Matyjaszewski, T.P. Davis (Wiley) p. 383-384.

The functional group can be attached to the rubber utilizing any acceptable method which places at least 1 functional group on the backbone or chain end of the diene rubber. In one embodiment, the functional group is attached to the rubber via the end of the polymer chain and no random attachment of the functional group occurs on the rubber polymer chain. Examples of such are included in U.S. Patent 5,721,320. In a preferred embodiment, the functionalized diene rubber does not contain any other functionalities which are reactive during the radical polymerization process, other than the typical unsaturation present in diene rubbers..

Additionally, non-functionalized rubbers can be used in combination with the functionalized diene rubbers in the process of the present invention. In this case, typically at least 5 weight percent of the total rubber present is a functionalized diene rubber, generally at least 10, preferably at least 15, more preferably at least 20 and most preferably at least 25 weight percent, based on the total weight of all rubbers, to about 100, preferably to about 90, more preferably to about 80, even more preferably to about 70, and most preferably to about 60 weight percent. The non-functionalized rubber can be any rubber typically used in rubber modified polymers including diene homopolymers and copolymers with vinyl aromatics; block copolymers, star branched rubbers, linear rubbers, and the like.

In one embodiment, the functional group of the functionalized diene rubber will generate a stable free radical which is capable of enabling controlled free radical polymerization. Stable free radicals include compounds which can act as radical polymerization inhibitors such as nitroxide radicals, for example, 2,2,6,6,-tetramethyl-1-piperidinyloxy (TEMPO) as disclosed in U.S. Patent 6,262,179 and U.S. Patent 5,721,320. Other stable free radical compounds include, but are not limited to 2,2,6,6-tetramethyl-1-[1-[4-(oxiranylmethoxy)phenyl]ethoxy]-piperidine and 3,3,8,8,10,10-hexamethyl-9-[1-[4-(oxiranylmethoxy)phenyl]ethoxy]-1,5-dioxa-9-azaspiro[5.5]undecane.

The stable free radical group is defined as a substituent which is capable of forming a stable free radical upon activation as described in U.S. Patent 5,721,320. Other nitroxy containing compounds can be found in U.S. Patent 4,581,429 by Solomon et al.

The rubber reinforced polymer can be prepared by dissolving the functionalized rubber in the vinyl aromatic monomer and polymerizing. This process can be conducted using conventional techniques known in the art for preparing rubber reinforced polymers such as high impact polystyrene (HIPS) and ABS, which are described in U.S. Patents 2,646,418, 4,311,819 and 4,409,369.

The amount of total rubber, including functionalized and any non-functionalized rubbers if present, used in the process of the present invention is from 5, preferably from 7 to 25 percent, preferably to 20 percent and more preferably to 18 percent, based on the total weight of the polymerization mixture. By total rubber, is meant the total weight of rubber present in the initial feed of the polymerization including the functionalized rubber and any non-functionalized rubbers. The initial feed is added to the first reactor and includes monomers, rubber, solvent, etc.

Initiators may optionally be used in the process of the present invention. Useful initiators include free radical initiators such as peroxide and azo compounds which will accelerate the polymerization of the vinyl aromatic monomer. Suitable initiators include but are not limited to peroxides such as tertiary butyl peroxyacetate, dibenzoyl peroxide, dilauroyl peroxide, 1-3-bis-(tertiarybutylperoxy)-3,3,5-trimethyl cyclohexane, t-butylhydroperoxide, ditertiary-butylperoxide, cumene hydroperoxide, dicumylperoxide, 1,1-bis(tertiary-butylperoxy)-3,3,5-trimethyl-cyclohexane, t-butylperoxybenzoate, 1,1-bis(t-butylperoxy)- cyclohexane, benzoylperoxide, succinoylperoxide and t-butyl-peroxypivilate, and azo compounds such as azobisisobutym-nitrile, azobis-2,4-dimethylvaleronitrile, azobiscyclohexanecarbo-nitrile, azobismethyl isolactate and azobiscyanovalerate.

Initiators may be employed in a range of concentrations dependent on a variety of factors including the specific initiators employed, the desired levels of polymer grafting and the conditions at which the mass polymerization is conducted. Typically from 50 to 500, preferably from 75 to 250, parts per million based on the total weight of the initial feed.

Additionally, a solvent may be used in the process of the present invention. Acceptable solvents include normally liquid organic materials which form a solution with the rubber, vinyl aromatic monomer and the polymer prepared therefrom. Representative solvents include aromatic and substituted aromatic hydrocarbons such as benzene, ethylbenzene, toluene, xylene or the like; substituted or unsubstituted, straight or branched chain saturated aliphatics of 5 or more carbon atoms, such as heptane, hexane, octane or the like; alicyclic or substituted alicyclic hydrocarbons having 5 or 6 carbon atoms, such as cyclohexane; and the like. Preferred solvents include substituted aromatics, with ethylbenzene and xylene being most preferred. In general, the solvent is employed in amounts sufficient to improve the processability and heat transfer during polymerization. Such amounts will vary depending on the rubber, monomer and solvent employed, the process equipment and the desired degree of polymerization. If employed, the solvent is generally employed in an amount of up to about 35 weight percent, preferably from about 5 to about 25 weight percent, based on the total weight of the initial feed.

Other materials/additives may also be present in the process of the present invention, including plasticizers, for example, mineral oil; flow promoters, lubricants, antioxidants, for example, alkylated phenols such as di-tertbutyl-p-cresol or phosphites such as trisnonyl phenyl phosphite; catalysts, for example, acidic compounds such as camphorsulfonic acid; mold release agents, for example, zinc stearate, or polymerization aids, for example, chain transfer agents such as an alkyl mercaptan, for example, n-dodecyl mercaptan and silicon oils. If employed, the chain transfer agent is generally employed in an amount of from about 0.001 to about 0.5 weight percent based on the total weight of initial feed.

The weight average molecular weight (Mw) of the matrix phase can vary greatly dependent upon the applications of the rubber modified polymer. Typically, the Mw can vary from 50,000 to about 300,000 g/mole. Mw is measured using gel permeation chromatography calibrated using polystyrene standards.

The polymerization can be achieved by a number of processes and is preferably conducted in one or more substantially linear stratified flow or so-called plug-flow type reactors, as described in U.S. Patent No. 2,727,884. In one embodiment, the composition of the present invention is produced using a linear polymerization process, utilizing one or more polymerization reactors to produce a rubber modified polymer having a broad monomodal rubber particle size distribution. In another embodiment, recirculation can be combined with the linear process. Recirculation is a technique wherein a portion of a partially polymerized feed is added back at an earlier stage of the polymerization process. If bimodal particle size distributions are desired, it can be accomplished by any acceptable method including those disclosed in U.S. Patents 4,221,883; 5,240,993; and 4,146,589, as well as in EP-96,447B and EP-892,820. In one aspect, a first mixture of a solution of a monovinylidene aromatic monomer, optionally an ethylenically unsaturated nitrile monomer, and a rubber is mass polymerized in the presence of an initiator under conditions sufficient to form a partially polymerized continuous phase containing polymer and discrete particles of highly grafted rubber having a specific volume average diameter. A second rubber-containing mixture is subsequently admixed with the partially polymerized feed under conditions such that the previously formed rubber particles remain dispersed throughout the continuous polymer phase. The newly added rubber is dispersed as discrete particles having a second volume average diameter. Bimodal compositions can also be obtained by producing each particle size in a separate reactor, combining both reaction streams and continuing the polymerization. Alternatively, melt blending can be used to combine two different rubber modified polymers to produce a rubber modified polymer having a bimodal particle size distribution, or a composition having two different rubber particle densities.

The process of the present invention is particularly useful in preparing high impact polystyrene (HIPS) and acrylonitrile-butadiene-styrene polymers(ABS) which can be used in a variety of applications including injection molding and thermoforming of refrigerator liners, household appliances, toys, automotive applications and furniture. The rubber modified polymers produced can also have advantageous applications in the production of articles containing other thermoplastic polymers, in that the rubber modified polymers produced by the process of the present invention have improved welding properties when compared to other rubber modified polymers of the prior art. Additionally, the polymers produced can be blended with other polymers for additional applications.

In a preferred embodiment, the present invention is a mass process for producing acrylonitrile/butadiene/styrene (ABS) rubber modified polymer consisting essentially of:
polymerizing styrene/acrylonitrile in the presence of a functionalized block copolymer rubber having a solution viscosity of less than 50 cps and containing greater than 5 weight percent polymerized styrene block, wherein the functionalized rubber comprises a functional group capable of forming a stable free radical group.

The following examples are provided to illustrate the present invention. The examples are not intended to limit the scope of the present invention and they should not be so interpreted. Amounts are in parts by weight unless otherwise indicated.

### Examples

Intrinsic Gloss is determined by 60° Gardner gloss on specimens prepared from molded samples, 30 minutes after molding, according to ISO 2813 with "Dr. Lange RB3" reflectometer.

Intrinsic gloss specimens were molded on an a DEMAG injection molding machine model D 150-452, having the following molding conditions: Barrel temperature settings of 210,215, and 220°C; Nozzle temperature of 225°C, Mold temperature of 30°C; Injection pressure: 1500 bar; Holding pressure 50 bar; Holding time 6 seconds; Cavity switch pressure: 200 bar; Cooling time: 30 seconds; and injection speed: 10 cubic centimeters per second (cm³/s).

The dimensions of the molded plaque are 64.2 mm x 30.3 mm x 2.6 mm. Intrinsic gloss is measured in the center of the plaque on the surface at which the pressure is measured. The materials are injected through one injected point located in the middle of the short side of the mold. During injection molding, the injection pressure switches to holding pressure when the cavity pressure reaches the pre-set value. The pressure transducer is located at a distance of 19.2 mm from the injection point

The polishing of the mold is according to SPI-SPE1 standard of the Society of Plastic Engineers.

Solution viscosity is measured in 5 wt. percent solution in styrene at 25°C.

RPS (rubber particle size) is measured using Coulter Counter (20µm orifice).

SB (styrene-butadiene) block copolymers are produced according to the process described in US Patent 5,721,320 (Priddy).

### Examples 1-3

A continuous polymerization apparatus composed of three 2.4 liter plug flow reactors connected in series, wherein each plug flow reactor is divided in three zones of equal size, each zone having a separate temperature control and equipped with an agitator (temperature settings of 107/110/114°C with an agitator speed of 120 rpm; 114/116/120°C with an agitator speed of 120 rpm; 125/140/150°C with an agitator speed of 30 rpm respectively), is continuously charged with a feed composed of 12 parts by weight of rubber, 55.5 parts by weight of styrene, 17.5 parts by weight of acrylonitrile and 15 parts by weight of ethyl benzene at a rate of 900 g/hr. The initiator, 1,1-di(t-butyl peroxy) cyclohexane and is added to the top of the first reactor. N-dodecylmercaptan (NDM)(chain transfer agent) is added to optimize the rubber particle sizing and the matrix molecular weight. Table 2 contains further details with respect to run conditions and properties.

After passing through the 3 reactors, the polymerization mixture is guided to a separation and recovery step using a preheater followed by a devolatilizing extruder. Finally the molten resin is stranded, cooled and cut in granular pellets. Four different functionalized rubbers are used (Table 1) to evaluate the sizing characteristics under various conditions (optimizing initiator and chain transfer concentration).

**Table 1**

| | Styrene/butadiene Rubbers | Sol.Visc. (cps) | Styrene content of rubber (wt. %) | Functionality on the rubber |
|---|---|---|---|---|
| Example 1 | A | 10 | 30 | I |
| Example 2 | B | 25 | 15 | I |
| Example 3 | C | 33 | 30 | I |
| Comp. Ex. 1 | D | 52 | 10 | none |

| | | | | |
|---|---|---|---|---|
| I) 2,2,6,6-tetramethyl-1-[1-[4-(oxiranylmethoxy)phenyl]ethoxy]-piperidine | | | | |

From Table 2 it is obvious that the RPS is much larger for comparative example 1, being reflected in a much lower intrinsic gloss.

**Table 2**

| Rubber type | Initiator top R1 (ppm) | NDM top R1 (ppm) | NDM top R2 (ppm) | RPS (µm) | Intr.Gloss (%) |
|---|---|---|---|---|---|
| A | 120 | 300 | 1000 | 0.45 | 82 |
| | 120 | 200 | 1000 | 0.39 | 88 |
| | 120 | 100 | 1000 | 0.42 | 84 |
| | 120 | 150 | 1000 | 0.38 | 87 |
| | 120 | 250 | 1000 | 0.39 | 90 |
| | 110 | 200 | 1000 | 0.39 | 89 |
| | 100 | 200 | 1000 | 0.40 | 89 |
| B | 100 | 200 | 1000 | 0.38 | 86 |
| | 100 | 150 | 1000 | 0.39 | 87 |
| | 100 | 250 | 1000 | 0.41 | 88 |
| | 100 | 100 | 1000 | 0.40 | 88 |
| | 100 | 50 | 1000 | 0.39 | 89 |
| | 90 | 50 | 1000 | 0.41 | 88 |
| | 90 | 0 | 1000 | 0.41 | 88 |
| C | 90 | 0 | 1000 | 0.40 | 87 |
| | 90 | 50 | 1000 | 0.41 | 87 |
| | 90 | 100 | 1000 | 0.40 | 87 |
| | 90 | 150 | 1000 | 0.42 | 86 |
| | 90 | 200 | 1000 | 0.42 | 84 |
| | 100 | 200 | 1000 | 0.41 | 85 |
| | 100 | 250 | 1000 | 0.46 | 82 |
| D* | 100 | 250 | 1000 | 0.61 | 67 |
| | 100 | 250 | 1200 | 0.63 | 64 |
| | 90 | 250 | 1200 | 0.66 | 66 |
| | 90 | 200 | 1200 | 0.59 | 69 |
| | 90 | 150 | 1600 | 0.75 | 61 |

| | | | | | |
|---|---|---|---|---|---|
| *Comparative Example | | | | | |

### Examples 4-5

Using the same equipment as described previously, 3 rubbers are evaluated as shown in Table 3. The comparative examples use a standard non-functionalized block rubber and the second series of examples use rubbers (30 wt. percent styrene), containing a functionality which enables controlled radical polymerizations.

**Table 3**

| | Rubber | Sol.Visc.(cps) | Styrene (wt. %) | Functionality |
|---|---|---|---|---|
| Example 4 | E | 24 | 30 | II |
| Example 5 | F | 10 | 30 | II |
| Comp. Ex. 2 | G | 17 | 30 | none |

| | | | | |
|---|---|---|---|---|
| In 3,3,8,8,10,10-hexaanethyl-9-[1-[4-(oxiranylmethoxy)phenyl]ethoxy]-1,5-dioxa-9-azaspho[5.5]undecane | | | | |

The feed composition, temperature and agitator speed of the reactors are the same. The same initiator and chain transfer agent are used, while different amounts are added to optimize the particle sizing and the matrix molecular weight. Feed based on non-functionalized rubber results in larger particles and very low intrinsic gloss, while small rubber particles and good intrinsic gloss are obtained using the functionalized rubber.

**Table 4**

| Rubber type | Initiator top R1 (ppm) | NDM top R1 (ppm) | NDM top R2 (ppm) | RPS (µm) | Intr.Gloss (%) |
|---|---|---|---|---|---|
| E | 100 | 250 | 600 | 0.41 | 83 |
| | 100 | 300 | 600 | 0.41 | 80 |
| | 100 | 250 | 840 | 0.42 | 85 |
| | 100 | 300 | 400 | 0.40 | 83 |
| F | 100 | 150 | 300 | 0.48 | 66 |
| | 100 | 150 | 1400 | 0.44 | 84 |
| | 100 | 200 | 1200 | 0.44 | 83 |
| | 100 | 250 | 1200 | 0.42 | 82 |
| G* | 100 | 150 | 300 | 0.61 | 29 |
| | 110 | 150 | 300 | 0.66 | 28 |
| | 120 | 150 | 300 | 0.58 | 25 |

| | | | | | |
|---|---|---|---|---|---|
| *Comparative Example | | | | | |

## Claims

1. A mass/solution polymerization process utilizing a functionalized rubber to produce a rubber modified polymer from a vinyl aromatic monomer comprising polymerizing the vinyl aromatic monomer using a linear polymerization process, utilizing one or more polymerization reactors, in the presence of a rubber, wherein the rubber comprises a functionalized styrene/butadiene block copolymer rubber having:
a) a solution viscosity (5 percent in styrene at 20 degrees C) of from 5 to less than 50 centipoise (cps), and
b) at least one functional group per rubber molecule which enables controlled radical polymerization;
such that grafted rubber particles are formed and dispersed within a matrix comprising polymerized vinyl aromatic monomer and have a broad monomodal size distribution and wherein the rubber is present in an amount of from 5 to 25 percent based on the total weight of the polymerisation mixture.

2. The process of Claim 1 wherein the vinyl aromatic monomer is styrene.

3. The process of Claim 1 wherein the vinyl aromatic monomer is copolymerized with acrylonitrile.

4. The process of Claim 1 wherein the functionalized diene rubber has a solution viscosity (5 weight percent in styrene at 20 C) of less than 45 cps.

5. The process of Claim 1 wherein the functionalized diene rubber contains a functional group capable of forming a stable free radical.

6. The process of Claim 5 wherein the functionalized diene rubber contains a nitroxide functional group.

7. The process of Claim 5 wherein the functionalized diene rubber contains a functional group selected from 2,2, 6,6,-tetramethyl-1-piperidinyloxy (TEMPO); 2,2, 6,6-tetramethyl-1- [1- [4- (oxiranylmethoxy) phenyl] ethoxy] -piperidine ; or 3,3, 8, 8, 10,10-hexamethyl-9- [1- [4- (oxiranylmethoxy) phenyl] ethoxy] -1,5-dioxa-9-azaspiro [5.5] undecane.

8. The process of Claim 1 wherein the functionalized diene rubber contains a functional group capable of atom transfer radical polymerization.

9. The process of Claim 1 wherein the functionalized diene rubber contains a functional group capable of reversible addition-fragmentation chain transfer polymerization.

10. The process of Claim 1 wherein the polymerization is conducted in the presence of a chain transfer agent.

11. The process of claim 1 wherein the polymerization is conducted in the presence of an initiator.

12. The process of claim 1 wherein the polymerization is conducted in the presence of an initiator and a chain transfer agent.

13. The process of claim 1 wherein a portion of a partially polymerized feed is recirculated to an earlier polymerization stage.

## Patentansprüche

1. Masse/Lösungs-Polymerisationsverfahren unter Verwendung eines funktionalisierten Kautschuks, um ein kautschukmodifiziertes Polymer aus einem aromatischen Vinylmonomer herzustellen, umfassend Polymerisieren des aromatischen Vinylmonomers unter Verwendung eines linearen Polymerisationsverfahrens, wobei ein oder mehrere Polymerisationsreaktoren eingesetzt werden, in Gegenwart eines Kautschuks, wobei der Kautschuk einen funktionalisierten Styrol/Butadien-Blockcopolymer-Kautschuk mit:
a) einer Lösungsviskosität (5 Prozent in Styrol bei 20°C) von 5 bis weniger als 50 Centipoise (cP) und
b) mindestens einer funktionellen Gruppe pro Kautschukmolekül, die kontrollierte radikalische Polymerisation ermöglicht,
enthält, so dass gepfropfte Kautschukteilchen gebildet werden und innerhalb einer Matrix, die polymerisiertes aromatisches Vinylmonomer enthält, dispergiert sind und eine breite monomodale Teilchengrößenverteilung aufweisen und wobei der Kautschuk in einer Menge von 5 bis 25 Prozent, bezogen auf das Gesamtgewicht der Polymerisationsmischung, vorhanden ist.

2. Verfahren nach Anspruch 1, wobei das aromatische Vinylmonomer Styrol ist.

3. Verfahren nach Anspruch 1, wobei das aromatische Vinylmonomer mit Acrylnitril copolymerisiert ist.

4. Verfahren nach Anspruch 1, wobei der funktionalisierte Dienkautschuk eine Lösungsviskosität (5 Gewichtsprozent in Styrol bei 20°C) von weniger als 45 cP aufweist.

5. Verfahren nach Anspruch 1, wobei der funktionalisierte Dienkautschuk eine funktionelle Gruppe enthält, die zur Ausbildung eines stabilen freien Radikals fähig ist.

6. Verfahren nach Anspruch 5, wobei der funktionalisierte Dienkautschuk eine funktionelle Nitroxidgruppe enthält.

7. Verfahren nach Anspruch 5, wobei der funktionalisierte Dienkautschuk eine funktionelle Gruppe enthält, die aus 2,2,6,6-Tetramethyl-1-piperidinyloxy (TEMPO); 2,2,6,6-Tetramethyl-1-[1-[4-(oxiranylmethoxy)-phenyl]-ethoxy]-piperidin oder 3,3,8,8,10,10-Hexamethyl-9-[1-[4-(oxiranylmethoxy)-phenyl]-ethoxy]-1,5-dioxa-9-azaspiro[5.5]undecan ausgewählt ist.

8. Verfahren nach Anspruch 1, wobei der funktionalisierte Dienkautschuk eine funktionelle Gruppe enthält, die zur Atom Transfer Radical Polymerization fähig ist.

9. Verfahren nach Anspruch 1, wobei der funktionalisierte Dienkautschuk eine funktionelle Gruppe enthält, die zur reversiblen Acldition-Fragmentation Chain Transfer Polymerization fähig ist.

10. Verfahren nach Anspruch 1, wobei die Polymerisation in Gegenwart eines Kettenübertragungsmittels durchgeführt wird.

11. Verfahren nach Anspruch 1, wobei die Polymerisation in Gegenwart eines Initiators durchgeführt wird.

12. Verfahren nach Anspruch 1, wobei die Polymerisation in Gegenwart eines Initiators und eines Kettenübertragungsmittels durchgeführt wird.

13. Verfahren nach Anspruch 1, wobei ein Teil eines partiell polymerisierten Stroms zu einer früheren Polymerisationsstufe zurückgeführt wird.

## Revendications

1. Procédé de polymérisation en masse/solution où l'on a recours à un caoutchouc fonctionnalisé pour produire un polymère modifié par un caoutchouc, à partir d'un monomère vinyl-aromatique, lequel procédé comporte le fait de faire polymériser le monomère vinyl-aromatique selon un procédé linéaire de polymérisation, en utilisant un ou plusieurs réacteur(s) de polymérisation, en présence d'un caoutchouc, lequel caoutchouc comprend un caoutchouc copolymère à blocs de styrène et de butadiène, fonctionnalisé,
a) qui présente, en solution à 5 % dans du styrène et à 20 °C, une viscosité de 5 à moins de 50 centipoises (cP),
b) et qui porte, par molécule de caoutchouc, au moins un groupe fonctionnel qui rend possible une polymérisation radicalaire contrôlée,
de telle manière qu'il se forme des particules de caoutchouc greffées, dispersées au sein d'une matrice comprenant du polymère du monomère vinyl-aromatique et présentant une distribution de tailles large et monomodale, ledit caoutchouc étant utilisé en une quantité représentant de 5 à 25 % du poids total du mélange soumis à la polymérisation.

2. Procédé conforme à la revendication 1, dans lequel le monomère vinyl-aromatique est du styrène.

3. Procédé conforme à la revendication 1, dans lequel le monomère vinyl-aromatique est copolymérisé avec de l'acrylonitrile.

4. Procédé conforme à la revendication 1, dans lequel le caoutchouc de diène fonctionnalisé présente, en solution à 5 % dans du styrène et à 20 °C, une viscosité de moins de 45 centipoises.

5. Procédé conforme à la revendication 1, dans lequel le caoutchouc de diène fonctionnalisé comporte un groupe fonctionnel qui est capable de former un radical libre stable.

6. Procédé conforme à la revendication 5, dans lequel le caoutchouc de diène fonctionnalisé comporte un groupe fonctionnel de type nitroxyle.

7. Procédé conforme à la revendication 5, dans lequel le caoutchouc de diène fonctionnalisé comporte un groupe fonctionnel choisi parmi les suivants : 2,2,6,6-tétraméthyl-pipéridinyl-1-oxy (TEMPO), 2,2,6,6-tétraméthyl-1- {1-[4-(oxiranyl-méthoxy)-phényl]-éthoxy}-pipéridine, ou 3,3,8,8,10,10-hexaméthyl-9-{1-[4-(oxiranyl-méthoxy)-phényl]-éthoxy}-1,5-dioxa-9-aza-spiro[5.5]undécane.

8. Procédé conforme à la revendication 1, dans lequel le caoutchouc de diène fonctionnalisé comporte un groupe fonctionnel qui est capable de conduire à une polymérisation radicalaire par transfert d'atome.

9. Procédé conforme à la revendication 1, dans lequel le caoutchouc de diène fonctionnalisé comporte un groupe fonctionnel qui est capable de conduire à une polymérisation par transfert de chaîne réversible par addition-fragmentation.

10. Procédé conforme à la revendication 1, dans lequel la polymérisation est effectuée en présence d'un agent de transfert de chaînes.

11. Procédé conforme à la revendication 1, dans lequel la polymérisation est effectuée en présence d'un amorceur.

12. Procédé conforme à la revendication 1, dans lequel la polymérisation est effectuée en présence d'un amorceur et d'un agent de transfert de chaînes.

13. Procédé conforme à la revendication 1, dans lequel on renvoie vers un étage précédent de polymérisation une partie de l'alimentation déjà partiellement polymérisée.
